**Europäisches Patentamt**

**European Patent Office**

**Office européen des brevets**

(19)

(11) Veröffentlichungsnummer: **0 009 615**
**B1**

(12) **EUROPÄISCHE PATENTSCHRIFT**

(45) Veröffentlichungstag der Patentschrift: **10.03.82**

(21) Anmeldenummer: **79103169.3**

(22) Anmeldetag: **28.08.79**

(51) Int. Cl.³: **A 21 C 1/14,** A 21 C 1/02, B 01 F 15/06

(54) Maschine zum Herstellen von Natursauerteig.

(30) Priorität: **09.10.78 DE 2843964**

(43) Veröffentlichungstag der Anmeldung:
**16.04.80 Patentblatt 80/8**

(45) Bekanntmachung des Hinweises auf die Patenterteilung:
**10.03.82 Patentblatt 82/10**

(84) Benannte Vertragsstaaten:
**AT BE CH FR GB IT LU NL SE**

(56) Entgegenhaltungen:
**US - A - 2 099 937**
**US - A - 2 274 220**
**US - A - 2 514 301**
**US - A - 3 709 664**

(73) Patentinhaber: **Thörmer, Dieter**
**Fichtenstrasse 70**
**D-4000 Düsseldorf (DE)**

(72) Erfinder: **Thörmer, Dieter**
**Fichtenstrasse 70**
**D-4000 Düsseldorf (DE)**

(74) Vertreter: **Sparing, Nikolaus, Dipl.-Ing.**
**Rethelstrasse 123**
**D-4000 Düsseldorf 1 (DE)**

Courier Press, Leamington Spa, England.

Maschine zum Herstellen von Natursauerteig

Die Erfindung betrifft eine Maschine zum Herstellen von Natursauer oder, genauer, zum Herstellen von Natursauerteig. Bekanntlich erhält man den Teig für Sauerteigbackwaren durch Vermischen und Verkneten von Mehl, Wasser und eventuell Gewürzen und sonstigen Zusatzstoffen mit dem sogenannten Sauer, das heißt einem nach der Gärung wieder beruhigten Gemenge aus ebenfalls Mehl, Wasser, gegebenenfalls Salz und einer Ursprungskultur, sogenannten Reinzuchtsauer.

Der Backteig wird durch Zusatz von Natursauerteig oder Trockensauerprodukten gewonnen. Mit letzteren gebackenes Brot hat eine im allgemeinen verminderte Haltbarkeit, so daß der Verarbeiter durch Kosten für Schimmelverhütungsmittel und dergleichen belastet wird. Die Herstellung von Natursauerteig dagegen ist mühsam, falls man nicht eine entsprechende Maschine einsetzt.

Solche Maschinen umfassen im Prinzip ein Gafäß mit einem Rührwerk. Der Reinsauer, das Mehl und das Wasser werden eingesetzt und mittels des Rührwerks vermischt. Nach der Gärung beruhigt sich der so gewonnene Sauer und kann für die Mischung mit Mehl, Wasser und gegebenenfalls weiteren Zutaten von Hand oder Mittels einer Dosierpumpe entnommen werden. Man kann zum erneuten Herstellen von Sauer einen Teil zurückbehalten und in der Maschine erneut mit Mehl und Wasser mischen, oder aber erneut mit Reinsauer arbeiten.

Je nach dem eingesetzten Reinsauer sind bei der Herstellung des Sauers bestimmte Temperatur/Zeit-Abläufe zu beachten. Zuerst sollen sich bei höherer Temperatur Milchsäurebakterien bilden, und bei niedriger Temperatur bilden sich Essigsäurebakterien. Bei Benutzung der bekannten Maschinen wird das Wasser mit einer solchen Temperatur eingesetzt, daß nach der Mehlzugabe sich die für Milchsäurebakterien günstige Temperatur einstellt.

Die für Essigsäurebakterien günstige niedrigere Temperatur ergibt sich dann einfach durch die Abkühlung des ganzen Aggregats infolge Zeitablauf. Die Umgebungsbedingungen, die dabei eine Rolle spielen, sind aber im allgemeinen nicht kontrollierbar, so daß gegebenenfalls diese niedrigere Temperatur gar nicht erreicht wird, insbesondere dort, wo die übrigen Betriebsinstallationen — vor allem die Backöfen — viel Wärme abgeben.

Aus diesem Grunde wurden besondere Reinsauer-Kulturen entwickelt, bei denen der Sauer mit Kaltwasser angesetzt wird, so daß sich zuerst die Essigsäurebakterien entwickeln können. Durch das Vermischen mittels des Rührwerks erwärmt sich dann die Masse auf eine für Bildung der Milchsäurebakterien ausreichende Temperatur. Nachteilig ist bei solchen Maschinen, daß der gewonnene Sauer reicher an Essigsäurebakterien ist und daher den Geschmack der Backwaren nachteilig beeinflussen kann; darüber hinaus dauert die Gewinnung des Sauers erheblich länger, wobei noch dazu das Rührwerk ständig arbeiten muß.

Zur Durchführung von Mischvorgängen ist es aus der US—A—3 709 664 bekannt, doppelwandige Gefäße, deren Mantel von einer Heiz- oder Kühlflüssigkeit durchströmt wird und in derem Inneren ein Rührwerk angeordnet ist, zu verwenden. Für die Herstellung von Brotbackteig wird nach der US—A—2 099 937 ein Gefäß mit einem doppelwandigen Mantel verwendet, in dessen Zwischenraum von Kühlflüssigkeit durchströmte Kühlschlangen angeordnet sind, die an eine Kühlaggregat angeschlossen sind. Entsprechend der Konsistenz des Teiges ist das Rührwerk mittels eines Zeitsteuerwerks von niedriger Drehzahl auf hohe Drehzahl automatisch umschaltbar, während die Kühlflüssigkeit dazu dient, die durch die Scherbeanspruchung im zähen Teig erzeugte Wärme abzuführen, um eine Überhitzen des Teiges zu vermeiden. Auch ist es bekannt, vgl. US—A—2 274 220, eine automatische Steuerung verschiedener Temperaturabläufe bei einem doppelwandigen mit Kühlmittelleitungen versehenen Gefäß mit Rührwerk für die Herstellung von Brotbackteig vorzusehen.

Aufgabe der Erfindung ist es, eine Maschine mit den im Oberbegriff des Patentanspruchs 1 genannten Merkmalen zu schaffen, bei der die Temperaturführung bei der Herstellung von Natursauerteig von den Umgebungsbedingungen unabhängig ist und gleichwohl ein Sauer mit den gewünschten Anteilen anMilch- und Essigsäurebakterien erhalten wird.

Diese Aufgabe wird erfindungsgemäß durch die im kennzeichnenden Teil des Patentanspruchs 1 genannten Maßnahmen gelöst. Dabei ist das gesteuerte Kühlaggregat nur scheinbar aufwendig. Der Backwarenhersteller benötigt nämlich, wenn er mit Natursauerteig arbeitet, weniger oder gar keine chemischen Zusätze zum Haltbarmachen der Backwaren, und auch der Aufwand an Arbeitskraft ist gering, da die Maschine vollautomatisch arbeiten kann. Hierfür ist die an sich bekannte Zeitsteuerung des Rührwerks so auf die Zeitsteuerung des Kühlaggregats abgestimmt, daß eine Überwachung entfällt, weil zu jedem Zeitpunkt die Bedingungen, unter denen sich der Sauer entwickelt, bekannt und kontrollierbar sind. Da das Rührwerk mindestens zeitweise den Sauer durchmischt, ergibt sich auch auf Dauer kein Temperaturgefälle zwischen der gekühlten Außenwand des Gefäßes und dem Bereich im Innern nahe der Rührwerkswelle, und ebensowenig ergibt sich in Vertikalrichtung eine Temperaturschichtung. Die Maschine wird, was ebenfalls im Rahmen der Erfindung vorgesehen ist, so betrieben, daß nach dem alternierend gegenläufigen Durchmischen der eingesetzten Ausgangsprodukte das Rührwerk intervallweise kurzzeitig eingeschaltet wird, z.B. eine Minute alle Viertelstunden. Dadurch wird einerseits die Temperaturverteilung vergleichmäßigt, wie oben erläutert, und andererseits wird ein Überschuß an Kohledioxid abgeführt, so daß der Sauer nicht mehr um Überquellen neigt.

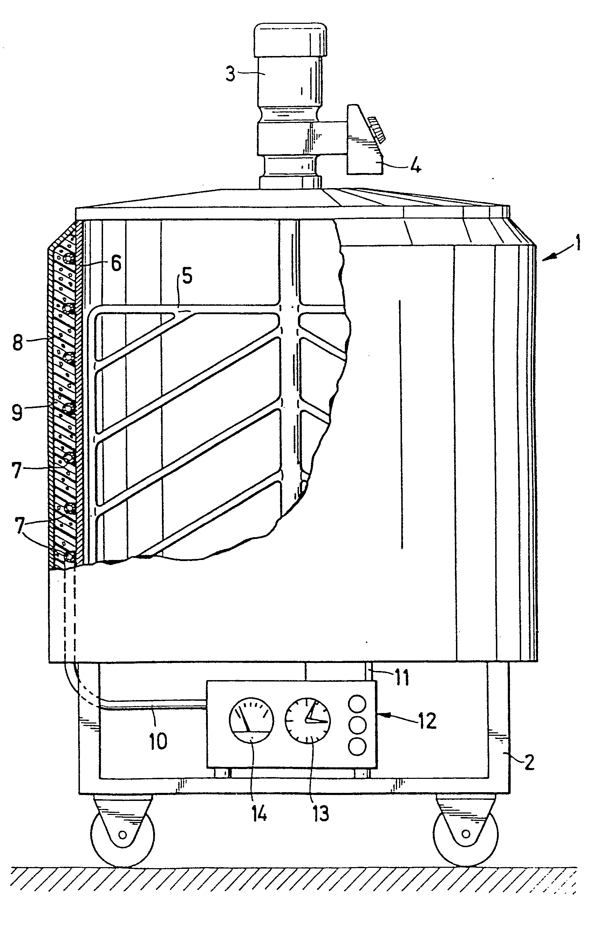

Ein Ausführungsbeispiel des Gegenstandes der Erfindung wird nachstehend unter Bezugnahme auf die beigefügte Zeichnung näher erläutert, die in Seitenansicht, teilweise geschnitten, eine erfindungsgemäße Maschine darstellt.

Das Gefäß 1 ruht auf einem fahrbaren Chassis 2. Auf der Oberseite des Gefäßes ist ein Rührwerksmotor 3 mit einem Zeitsteueraggregat 4 befestigt, und auf der sich senkrecht nach unten erstreckenden Rührwerkswelle sitzt die Rührflügelanordnung 5.

Das im wesentlichen zylindrische Gefäß 1 weist eine Innenwandung 6 auf, an der eine Rohrschlange 7 angeordnet, vorzugsweise angelötet ist. Die Rohrschlange ist außen von einer Außenwandung 8 umschlossen, und der Zwischenraum 9 ist vorzugsweise mit einem gut wärmeisolierenden Kunststoff ausgeschäumt.

Die Zuleitung 10 und die Ableitung 11 der Rohrschlange sind mit dem Kühlaggregat 12 verbunden, das ein Zeitsteuerwerk (Schaltuhr) und ein Temperaturmeßwerk aufweist. Zeitablauf und Temperatur werden auf den Skalen 13 bzw. 14 angezeigt. Am Boden des Gefäßes 1, der selbst nicht gekühlt wird, ist ein Temperaturfühler angeordnet, und im Temperaturmeßwerk wird die vorwählbare, und zwar in Abhängigkeit vom Zeitablauf unterschiedliche, Solltemperatur mit dier gemessenen Temperatur verglichen und das Kühlaggregat wird entsprechend geregelt.

Die Maschine kann mit einem handbetätigten Auslaß oder mit einer Dosierpumpe versehen sein, doch sind hier beide nicht dargestellt, da sie im Rahmen der Erfindung nicht geändert zu werden brauchen.

Das Zeitsteueraggregat 4 des Rührwerks und das Zeitsteuerwerk des Kühlaggregats können natürlich miteinander baulich und/oder funktionell verbunden werden, wenn sich dadurch Kostenersparnisse ergeben.

## Patentansprüche

1. Maschine zum Herstellen von Natursauerteig mit einem Gefäß (1), in das die Ausgangsprodukte eingesetzt werden, einem Rührwerk (3 bis 5) zum Durchmischen der Ausgangsprodukte und mit einer handbetätigten oder mit einer Pumpe bestückten Austragvorrichtung, dadurch gekennzeichnet, daß das Gefäß (1) einen doppelwandigen Mantel (6, 8) mit in dessen Zwischenraum (9) angeordneten Fluidführungen (7), die an ein Kühlaggregat (12) angeschlossen sind zum Umwälzen von Kühlfluid durch die Fluidführungen (7) entsprechend den Bedingungen der verwendeten Sauerkultur, die an einem Steuerwerk einstellbar sind, aufweist, wobei die Zeitsteuerung des Rührwerks (3 bis 5) auf die Zeitsteuerung des Kühlaggregats (12) abgestimmt ist, das Rührwerk (3 bis 5) — nach Einsetzen der Ausgangsprodukte — alternierend in zwei Drehrichtungen betreibbar und — während des Reifeprozesses des Natursauers — intervallweise kurzzeitig betreibbar ist und die Rührwerkssteuerung und die Kühlaggregatssteuerung von einem vorzugsweise gemeinsamen Zeitsteuerwerk (4) betätigt werden.

2. Maschine nach Anspruch 1, dadurch gekennzeichnet, daß das Kühlaggregat (12) an die Maschine angebaut ist.

3. Maschine nach Anspruch 2, dadurch gekennzeichnet, daß das Kühlaggregat (12) unter dem Gefäß (1) und ein Rührwerksmotor (3) über dem Gefäß angeordnet sind.

## Revendications

1. Machine de fabrication de pâte de levain naturel comportant une cuve (1), dans laquelle sont introduites les matières premières, un dispositif agitateur (3 à 5) pour assurer le brassage des matières premières et un dispositif de décharge actionné manuellement ou équipé d'une pompe, caractérisée en ce que la cuve (1) comporte une enveloppe à double paroi (6, 8) comportant des canalisations de fluide (7) disposées dans l'espace intermédiaire (9), qui sont reliées à un groupe de réfrigération (12) en vue d'assurer une circulation de fluide réfrigérant dans les canalisations (7) en correspondance aux conditions de culture du levain utilisé, ces dernières étant réglables à l'aide d'un dispositif de commande, la commande temporelle du dispositif agitateur (3 à 5) étant coordonnée avec la commande temporelle du groupe de réfrigération (12), le dispositif agitateur (3 à 5) pouvant être entraîné alternativement dans deux sens de rotation — après introduction des matières premières — et pouvant être enclenché à intervalles pendant de courtes périodes — pendant le processus de fermentation du levain naturel —, et la commande d'agitateur ainsi que la commande de dispositif de réfrigération étant assurées par une minuterie de préférence commune (4).

2. Machine selon la revendication 1, caractérisée en ce que le groupe de réfrigération (12) est installé sur la machine.

3. Machine selon la revendication 2, caractérisée en ce que le groupe de réfrigération (12) est disposé en dessous de la cuve (1) et en ce qu'un moteur d'agitateur (3) est disposé au-dessus de la cuve.

## Claims

1. Machine for producing natural leaven comprising a container (1) into which the initial products are inserted, an agitator (3 to 5) for mixing the initial products, and a manually operated or pump fed discharge apparatus, characterized in that the container (1) is provided with a double walled jacket (6, 8) with fluid duct means (7) in the interior (9) thereof, the fluid ducts being connected to a cooling device (12) for circulating cooling fluid through the fluid ducts (7) in accordance with the conditions of the applied leaven culture adjustable by means of a control unit, the temporal control of the agitator (3 to 5) being adapted to the temporal control of the cooling device (12), the agitator after insertion of the initial products being alternatively driveable in two rotation senses and being, during the ripening process of the natural leaven, being driveable in intervals for short periods, and the agitator control and the cooling device control being operated by a preferably common clock device (4).

2. Machine as set forth in claim 1, characterized in that the cooling device (12) is attached to the machine.

3. Machine as set forth in claim 2, characterized in that the cooling device (12) is disposed beneath the container (1) and an agitator motor (3) is disposed above the container.